# EUROPÄISCHE PATENTANMELDUNG

(11) **EP 2 375 173 A1**
(43) Veröffentlichungstag der Anmeldung: **12.10.2011**
(21) Anmeldenummer: 11159947.8
(22) Anmeldetag: 28.03.2011
(51) Int. Cl.: F24C 15/20, B08B 15/02, B01D 46/52, B01D 46/00

(54) **Abzugseinrichtung und Geruchsfilter**

(30) Priorität: 07.04.2010 DE 102010014059
(71) Anmelder: MAHLE International GmbH, 70376 Stuttgart (DE)
(72) Erfinder: Renz, Birgit, 71672, Marbach (DE)
(74) Vertreter: BRP Renaud & Partner

(57) **Zusammenfassung**

Die vorliegende Erfindung betrifft eine Abzugseinrichtung (1) zum Absaugen von Dampf und/oder Gas aus einem Arbeitsbereich (2), mit einem zum Arbeitsbereich (2) offenen Einlass (3), mit einem Abführkanal (4), der den Einlass (3) mit wenigstens einem Auslass (5) verbindet, und mit einem im Abführkanal (4) angeordneten Gebläse (7).

Emissionswerte der Abzugseinrichtung (1) lassen sich durch ein im Abführkanal (4) angeordnetes Geruchsfilter (8) verbessern, das mehrere Filterkanäle aufweist, die von der im Abführkanal (4) geführten Strömung (6) parallel durchströmbar sind.

## Beschreibung

Die vorliegende Erfindung betrifft eine Abzugseinrichtung zum Absaugen von Dampf und/oder Gas aus einem Arbeitsbereich. Die Erfindung betrifft außerdem ein Geruchsfilter für eine derartige Abzugseinrichtung.

Üblicherweise besitzt eine Abzugseinrichtung einen zum Arbeitsbereich hin offenen Einlass, einen Abführkanal, der den Einlass mit einem Auslass verbindet, sowie ein im Abführkanal angeordnetes Gebläse.

Abzugseinrichtungen dieser Art kommen bspw. in Küchen an einer Kochstelle zum Einsatz. Ebenso können derartige Abzugseinrichtungen in einem Labor verwendet werden, um bei einem Arbeitsplatz kritische Gase oder Dämpfe absaugen und vom Arbeitsplatz wegführen zu können.

Insbesondere bei Küchenanwendungen ist es üblich, im Abführkanal ein Filter anzuordnen, um im abgesaugten Gas oder Dampf mitgeführte Partikel sowie Tröpfchen aus dem abgesaugten Strom herausfiltern zu können. Beispielsweise lassen sich dadurch im abgesaugten Luftstrom mitgeführte Fetttröpfchen oder Öltröpfchen herausfiltern, um eine Verunreinigung des Kanals sowie des Gebläses zu vermeiden.

Die DE 20 2007 012 934 U1 offenbart einen Aktivkohlefilter für eine Dunstabzugshaube. Der Aktivkohlefilter ist als starrer, extrudierter Formkörper mit durchgehenden Kanälen ausgebildet. Die Herstellung eines derartigen Formkörpers ist jedoch aufwendig und teuer.

Die DE 299 08 791 offenbart eine Dunstabzugsvorrichtung mit einem plissierten Filterelement. Dieses Filterelement ist quer zur Durchströmungsrichtung in einem Abführkanal angeordnet. Somit muss die zu reinigende Luft durch das Filtermedium hindurchtreten, um auf die gegenüberliegende Filterseite zu gelangen. Mit zunehmender Verschmutzung des Filterelementes steigt der Differenzdruck an.

Die vorliegende Erfindung beschäftigt sich mit dem Problem, für eine derartige Abzugseinrichtung eine verbesserte Ausführungsform anzugeben, die sich insbesondere durch einen erhöhten Gebrauchswert bzw. durch eine reduzierte Geruchs- und Schadstoffemission auszeichnet. Außerdem soll die Abzugseinrichtung einfach und kostengünstig herstellbar sein.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Abzugseinrichtung mit einem Geruchsfilter auszustatten. Hierbei kann die Abzugseinrichtung z.B. über einer Kochstelle einer Haushaltsküche, einem Laborarbeitsplatz oder einer sonstigen Geruchsemissionsquelle angeordnet werden. Mit Hilfe eines derartigen Geruchsfilters lassen sich Geruchsstoffe aus dem abgesaugten Luftstrom herausfiltern, auch wenn sie sich in einem gasförmigen Zustand befinden. Damit unterscheidet sich ein derartiges Geruchsfilter von einem herkömmlichen Filter, das für Gase weitgehend durchlässig ist und lediglich feste oder flüssige Verunreinigungen aus dem jeweiligen Luftstrom herausfiltern kann.

Durch den Einbau eines Geruchsfilters in den Abführkanal kann somit eine Emission von störenden Geruchsstoffen in durch den Auslass der

Abzugseinrichtung in die Umgebung vermindert bzw. vermieden werden. Insoweit kann eine Emission von Schadstoffen bzw. Gerüchen reduziert werden, während gleichzeitig der praktische Nutzen der Abzugseinrichtung verbessert werden kann.

Das erfindungsgemäße Geruchsfilter weist mehrere Filterkanäle auf, die von der im Abführkanal geführten Strömung parallel durchströmbar sind. Derartige Filterkanäle können eine vergleichsweise große Oberfläche für die Geruchssorption bereitstellen, ohne dass dabei der Durchströmungswiderstand des Geruchsfilters zu groß wird. Die Filterkanäle, welche in axialer Richtung der Filterkanäle durchströmt werden, werden durch Falten oder Wellen eines entsprechend gewellten oder gefalteten bzw. plissierten Filtermaterials gebildet. Das heißt, durch die Falten bzw. Wellen werden Zwischenräume geschaffen, welche die Filterkanäle bilden. Das Filtermaterial ist ein Bahnenmaterial, also eine dünne, flächige Bahn, welche aufgrund der verwendeten Materialien Filtrationseigenschaften aufweist. Derartige Materialien können z. B. zellulosehaltige Papiere oder Vliese aus synthetischen Fasern oder Gemische unterschiedlicher Fasern mit oder ohne Zusätze sein. Die Falten oder Wellen werden z.B. durch Präge- oder Profilwalzen in das flächige Filtermaterial eingebracht und aufgestellt. Durch die Falten oder Wellen werden große Oberflächen mit geringem Druckwiderstand geschaffen, an welchen die zu reinigende Luft-, bzw. Dampf- oder Gasströmung vorbeiströmen kann und die störenden Geruchsstoffe entfernt werden.

Besonders vorteilhaft ist dabei eine Ausführungsform, bei welcher das Geruchsfilter ein für Geruchsstoffe sorbierend, also adsorbierend und/oder absorbierend, wirkendes Filtermaterial aufweist. Beispielsweise kann das Filtermaterial ein für Geruchsstoffe sorbierend wirkendes Sorptionsmaterial, insbesondere ein Adsorptionsmaterial und/oder Absorptionsmaterial, wie z. Bsp. Zeolite, Molekularsieb oder Aktivkohle, enthalten. Derartige Sorptionsmaterialien besitzen für Geruchsstoffe, die in der Regel aus vergleichsweise großen Molekülen bestehen, eine erhöhte Anziehungskraft als für kleine Moleküle, wie z. Bsp. O₂, N₂ und CO₂, was die Hauptbestandteile von Luft sind.

Zur Realisierung des Geruchsfilters kann bspw. ein Filtermaterial verwendet werden, das ein Grundmaterial und Kohlenstoff, insbesondere Aktivkohle, als integrierten Füllstoff aufweist. Das Grundmaterial kann dabei bevorzugt aus Kunststoff bestehen, das Kohlenstoff als Füllstoff enthält. Ebenso kann es sich beim Filtermaterial um ein mit Kohlenstoff angereichertes Filterpapier handeln. Beispielsweise umfasst ein derartiges Filterpapier einen Faserstoff, insbesondere ein Kunststoffvlies oder ein Zellulosepapier, als Grundmaterial und Kohlenstoff als Füllstoff.

Entsprechend einer vorteilhaften Ausführungsform kann im Abführkanal zusätzlich zum Geruchsfilter ein Partikelfilter angeordnet sein, um feste und/oder flüssige Partikel oder Verunreinigungen aus dem Luftstrom herauszufiltern. Das Partikelfilter ist dabei separat zum Geruchsfilter vorgesehen und dazu insbesondere beabstandet angeordnet. Zweckmäßig kann das Partikelfilter dabei stromauf des Geruchsfilters im Abführkanal angeordnet sein. Hierdurch kann eine Beladung des Geruchsfilters durch im Luftstrom mitgeführte Partikel reduziert werden. Dies führt zu einer längeren Haltbarkeit des Geruchsfilters.

Zweckmäßig ist eine Ausführungsform der Filterkanäle, bei welcher die Filterkanäle beidseitig offen sind, so dass die Strömung durch das Geruchsfilter hindurchströmen kann, ohne das Filtermaterial des Geruchsfilters zu durchströmen. Bei einer derartigen Ausführungsform besitzt das Geruchsfilter einen besonders niedrigen Durchströmungswiderstand. Durch das vorbeiströmen des zu reinigenden Gases an dem Filtermedium verbleiben die Geruchsmoleküle an dem Sorbtionsmaterial.

Bei einer alternativen Ausführungsform können die Filterkanäle wechselweise einlassseitig und auslassseitig verschlossen sein, so dass die Strömung beim Durchströmen des Geruchsfilters das Filtermaterial des Geruchsfilters durchströmt. Die Durchströmung des Filtermaterials führt zu einer Intensivierung des Kontakts zwischen Gasströmung und Filtermaterial, was die Sorptionswirkung verbessert. Bei einer derartigen Ausführungsform können auslassseitig verschlossene Einlasskanäle und einlassseitig verschlossene Auslasskanäle gemeinsame Wandungen aus dem Filtermaterial aufweisen, so dass die Luftströmung von einem Einlasskanal nur durch das Filtermaterial in einen Auslasskanal gelangt. Zweckmäßig wechseln sich dabei Einlasskanäle und Auslasskanäle im Querschnitt des Geruchsfilters schachbrettartig ab.

Das Geruchsfilter kann bspw. als Wickelfilter ausgestaltet sein. Ein derartiges Wickelfilter kann sich insbesondere dadurch charakterisieren, dass es durch Wickeln von zwei aufeinander liegenden Filtermaterialien gebildet ist, von denen das eine eben ist, während das andere gewellt oder zick-zack-förmig gestaltet ist. Zumindest eines dieser Filtermaterialien kann dann durch das für Geruchsstoffe sorbierend wirkende Filtermaterial gebildet sein.

Alternativ kann das Geruchsfilter als Stapelfilter ausgestaltet sein, das sich insbesondere dadurch charakterisiert, dass es durch abwechselndes Stapeln von zwei Filtermaterialien gebildet ist, von denen das eine eben ist, während das andere gewellt oder zick-zack-förmig ausgestaltet ist. Hierbei werden die parallel verlaufenden Kanäle durch die Wellen bzw. die Falten gebildet. Durch das Stapeln werden mehrere in Längs- und Querrichtung parallel zu einander verlaufende Kanäle gebildet, welche in axialer Richtung durchströmt werden. Auch hier kann vorgesehen sein, dass zumindest eines der Filtermaterialien durch das für Geruchsstoffe sorbierend wirkende Filtermaterial gebildet ist.

Alternativ kann das Geruchsfilter als Faltensternfilter ausgestaltet sein, das sich insbesondere dadurch charakterisiert, dass es durch ringförmiges Anordnen eines gefalteten Filtermaterials gebildet ist. Abweichend zu einem konventionellen Faltensternfilter benötigt das Geruchsfilter vorzugsweise keine Endscheiben. Bei anderen Ausführungen können Endscheiben vorgesehen sein, welche nur eine Teilmenge der Kanäle verschließen. Die gegenüberliegend angeordnete Endscheibe kann dann die restlichen Kanäle verschließen, wodurch wechselseitig verschlossene Kanäle gebildet werden und das Gas durch das Filtermedium hindurchströmen muss. Weiterhin können die Endscheiben zur Abdichtung des Geruchsfilters in der Abzugseinrichtung verwendet werden. Außerdem kann das Geruchsfilter optional mit einem den Faltenstern umschließenden Mantel aus Filtermaterial versehen sein. Auch hier ist es möglich, zumindest eines der Filtermaterialien aus dem für Geruchsstoffe sorbierend wirkenden Filtermaterial zu bilden.

Die vorstehend erläuterten unterschiedlichen Ausgestaltungen für das Geruchsfilter zeigen, dass das Geruchsfilter für unterschiedliche Anwendungen adaptiert werden kann, um es bspw. an den jeweils zur Verfügung stehenden Einbauraum optimal anpassen zu können.

Bevorzugt ist eine Ausführungsform, bei welcher das den Einlass aufweisende Kanalende als Haube ausgestaltet ist. Hierdurch besitzt der Einlass einen deutlich größeren Querschnitt als der eigentliche Abführkanal, wodurch das Einzugsgebiet für die Abzugseinrichtung erheblich vergrößert werden kann. Optional kann vorgesehen sein, dass das Geruchsfilter oder das ggf. vorhandene Partikelfilter in der Haube angeordnet ist. Da die Haube einen größeren Querschnitt bereitstellt als der Abführkanal, kann durch die Unterbringung des jeweiligen Filters in der Haube viel Filterfläche bei geringem Durchströmungswiderstand realisiert werden.

Bei einer besonderen Ausführungsform können zumindest zwei verschiedene Geruchsfilter im Abführkanal hintereinander angeordnet sein, die sich insbesondere hinsichtlich der verwendeten Filtermaterialien und/oder Sorbtionsmaterialien und/oder hinsichtlich ihrer geruchssorbierenden Wirkung und/oder hinsichtlich ihres Durchströmungswiderstands voneinander unterscheiden können. Insbesondere können die verschiedenen Geruchsfilter Filterkanäle unterschiedlicher Anzahl und/oder Anordnung und/oder Strömungsquerschnitte aufweisen. Mittels einer derartigen Kaskade aufeinanderfolgender Geruchsfilter kann die geruchsreinigende Wirkung insgesamt verbessert werden. Beispielsweise lassen sich die einzelnen Geruchsfilter für unterschiedliche Geruchsstoffe abstimmen, die sich bspw. durch die Größe und/oder Art ihrer Moleküle voneinander unterscheiden. Insgesamt ergibt sich dadurch eine verbesserte Filtrationswirkung sowie eine vergrößerte Standzeit für die Filteranordnung.

Der Abführkanal kann beabstandet zu seinem Einlass einen seitlichen Zugriff zum jeweiligen Geruchsfilter aufweisen. Ein derartiger Zugriff kann bspw. in Form einer Schublade oder in Form einer Klappe oder dergleichen realisiert werden. Hierdurch kann bspw. eine Wartung bzw. ein Austausch des Geruchsfilters vereinfacht werden.

Die jeweilige Abzugseinrichtung kann für einen Umluftbetrieb oder für einen Abluftbetrieb ausgestaltet sein. Ebenso sind Ausführungsformen denkbar, bei denen zwischen Umluftbetrieb und Abluftbetrieb umschaltbar ist und/oder bei denen eine Strömungsaufteilung auf Umluft und Abluft in Stufen oder stufenlos einstellbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: ein stark vereinfachter Längsschnitt einer Abzugseinrichtung,
- Fig. 2 und 3: jeweils einen Querschnitt durch ein Geruchsfilter, bei verschiedenen Ausführungsformen,
- Fig. 4 und 5: je eine vereinfachte isometrische Ansicht eines Geruchsfilters bei anderen Ausführungsformen,
- Fig. 6 und 7: je einen stark vereinfachten Längsschnitt durch ein Geruchsfilter, bei verschiedenen Ausführungsformen,
- Fig. 8 und 9: Querschnitte von Geruchsfiltern wie in den Fig. 2 und 3, jedoch bei anderen Ausführungsformen,
- Fig. 10: eine stark vereinfachte Seitenansicht einer Abzugseinrichtung wie in Fig. 1, jedoch bei einer anderen Ausführungsform,
- Fig. 11: einen Querschnitt der Abzugseinrichtung aus Fig. 10 entsprechend Schnittlinien Xl.

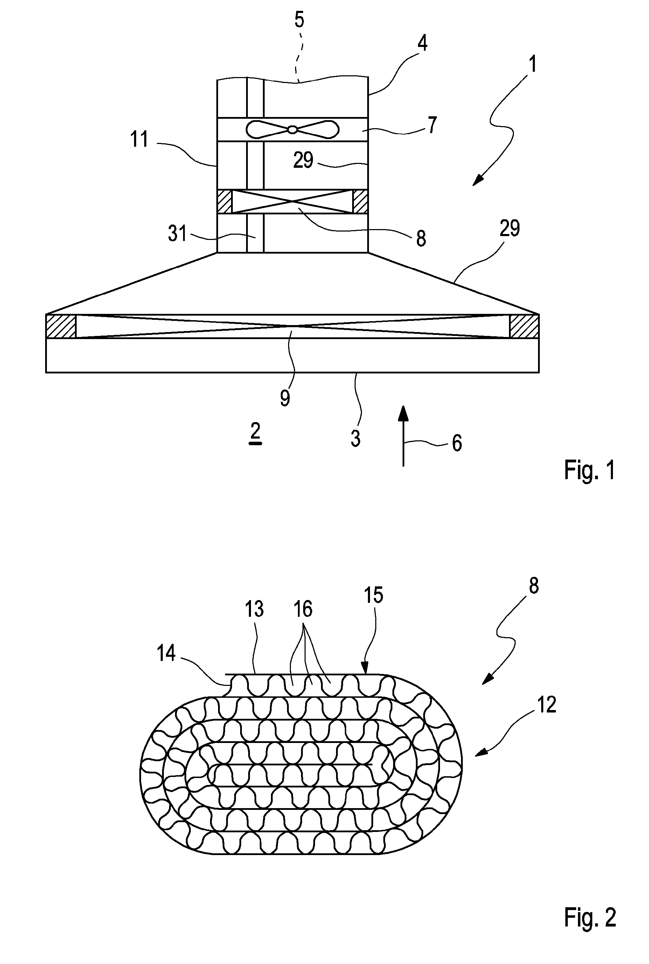

Entsprechend Fig. 1 umfasst eine Abzugseinrichtung 1, mit deren Hilfe Dampf oder Gas aus einem Arbeitsbereich 2 abgesaugt werden kann, einen Einlass 3, der zum Arbeitsbereich 2 hin offen ist, sowie einen Abführkanal 4, der den Einlass 3 mit mindestens einem Auslass 5 verbindet. Ein solcher Auslass 5 kann dabei im gleichen Raum angeordnet sein, in dem sich auch der Arbeitsbereich 2 befindet. Die Abzugseinrichtung 1 ist dann nur für einen Umluftbetrieb ausgestaltet. Bevorzugt befindet sich ein solcher Auslass 5 jedoch in einem vom Arbeitsbereich 2 getrennten Raum. Vorzugsweise mündet dann der Auslass 5 in eine Umgebung eines Gebäudes, in dem sich der Arbeitsbereich 2 bzw. die Geruchsemissionsquelle befindet. In diesem Fall kann die Abzugseinrichtung 1 für einen Abluftbetrieb konzipiert sein. Ebenso ist eine Ausführungsform denkbar, bei welcher die Abzugseinrichtung 1 zumindest einen ersten Auslass 5 für einen Umluftbetrieb, also einen Umluftauslass 5, sowie zumindest einen zweiten Auslass 5 für einen Abluftbetrieb, also einen Abluftauslass 5 aufweist. Desweiteren kann dann die Abzugseinrichtung 1 mittels einer entsprechenden Umschalteinrichtung zwischen Umluftbetrieb und Abluftbetrieb umgeschaltet werden. Desweiteren ist denkbar, zumindest einen Mischbetrieb zuzulassen, in dem ein mit Hilfe der Abzugseinrichtung 1 angesaugter Luftstrom 6 auf den Abluftauslass 5 und auf den Umluftauslass 5 aufgeteilt werden kann, wobei auch hier vorstellbar ist, das Aufteilungsverhältnis in Stufen oder stufenlos variieren zu können.

Im Abführkanal 4 ist ein Gebläse 7 angeordnet, das die Luftströmung 6 durch den Einlass 3 ansaugt und durch den jeweiligen Auslass 5 ausbläst. Sofern das Gebläse 7 am auslassseitigen Ende des Kanals 4 angeordnet ist, befindet sich dann der jeweilige Auslass 5 an der Austrittsseite des Gebläses 7.

Bei der hier vorgestellten Abzugseinrichtung ist im Abführkanal 4 ein Geruchsfilter 8 angeordnet. Die Anordnung des Geruchsfilters 8 im Abführkanal 4 erfolgt dabei so, dass die gesamte angesaugte Luftströmung 6 das Geruchsfilter 8 durchströmen muss, bevor sie zum Auslass 5 gelangt.

Fig. 1 zeigt eine Ausführungsform, bei welcher im Abführkanal 4 zusätzlich zum Geruchsfilter 8 ein Partikelfilter 9 angeordnet ist. Das Partikelfilter 9 befindet sich im Beispiel zweckmäßig stromauf des Geruchsfilters 8. Ferner ist es zum Geruchsfilter 8 beabstandet im Abführkanal 4 positioniert.

Das Partikelfilter 9 kann bspw. durch ein herkömmliches, für Geruchsstoffe üblicherweise nicht oder im Vergleich zum Filtermaterial des Geruchsfilters 8 nur sehr geringfügig sorbierend wirkendes Filtermaterial gebildet sein. Es dient vorwiegend dazu, feste oder flüssige, insbesondere tröpfchenförmige, Verunreinigungen aus dem Luftstrom 6 herauszufiltern, bevor diese zum Geruchsfilter 8 gelangen. Hierdurch kann eine vorzeitige Erschöpfung oder Beladung des Geruchsfilters 8 mit herkömmlichen Verunreinigungen vermieden werden. Insgesamt kann dadurch eine ordnungsgemäße Funktion der Abzugseinrichtung 1 länger sichergestellt werden.

Bei der in Fig. 1 gezeigten Ausführungsform ist außerdem ein einlassseitiges Kanalende 10, welches den Einlass 3 enthält, als Haube ausgestaltet, die im Folgenden ebenfalls mit 10 bezeichnet wird. Im Beispiel ist das Partikelfilter 9 in dieser Haube 10 angeordnet. Im Unterschied dazu ist hier das Geruchsfilter 8 in einem an die Haube 10 anschließenden Abschnitt 11 des Kanals 4 angeordnet, der auch als Kamin 11 bezeichnet werden kann.

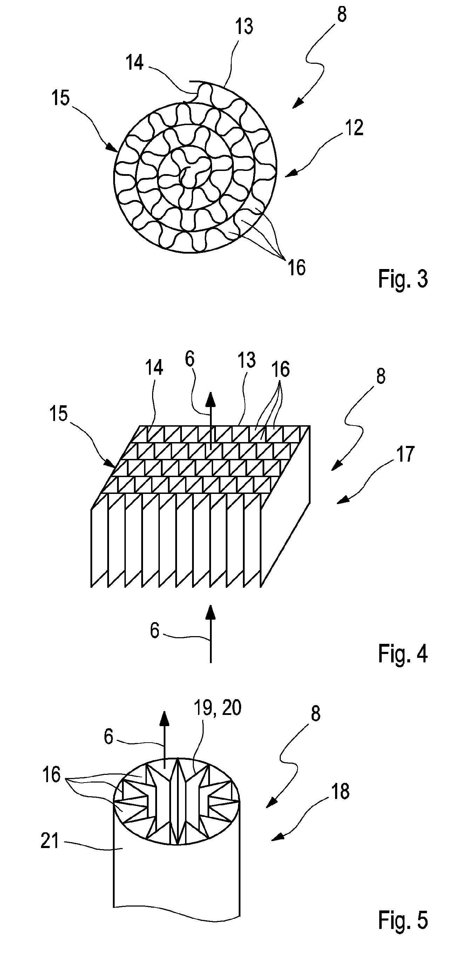

Gemäß den Fig. 2 und 3 kann das Geruchsfilter 8 als Wickelfilter 12 ausgestaltet sein. Ein derartiges Wickelfilter 12 kann bspw. dadurch hergestellt werden, dass zwei aufeinander liegende Filtermaterialien 13, 14 gewickelt werden, wobei z.B. gemäß Fig. 2 eine Flachwicklung und gemäß Fig. 3 eine Zylinderwicklung möglich sind. Die im Wickelfilter 12 aufgewickelten Filtermaterialien 13, 14 sind unterschiedlich geformt. Das eine Filtermaterial 13 ist eben, während das andere Filtermaterial 14 gewellt oder zick-zack-förmig ausgestaltet ist. Durch die Wicklung der beiden aufeinander liegenden Filtermaterialien 13, 14 bilden sich im so hergestellten Filterkörper 15 eine Vielzahl von parallel durchströmbaren Filterkanälen 16 aus.

Gemäß Fig. 4 kann das Geruchsfilter 8 bei einer anderen Ausführungsform als Stapelfilter 17 ausgestaltet sein. Ein derartiges Stapelfilter 17 kann bspw. dadurch hergestellt werden, dass wieder zwei Filtermaterialien 13, 14 einander abwechselnd aufeinander gestapelt werden. Auch hier ist das eine Filtermaterial 13 eben, während das andere Filtermaterial 14 gewellt bzw. zick-zack-förmig ausgestaltet ist. In dem durch die aufeinander gestapelten Filtermaterialien 13, 14 gebildeten Filterkörper werden auch beim Stapelfilter 17 mehrere parallel durchströmbare Filterkanäle 16 realisiert.

Gemäß Fig. 5 kann bei einer anderen Ausführungsform das Geruchsfilter 8 als Faltensternfilter 18 ausgestaltet sein. Ein derartiges Faltensternfilter 18 kann bspw. dadurch hergestellt werden, dass ein zick-zack-förmig gefaltetes oder plissiertes Filtermaterial 19 ringförmig angeordnet wird, um dadurch einen Filterkörper 20 zu bilden, der auch als Faltenstern bezeichnet werden kann. Im gezeigten Beispiel ist das Faltensternfilter 18 außerdem mit einem Mantel 21 versehen, der den Faltenstern 20 umschließt und der zweckmäßig ebenfalls aus einem Filtermaterial besteht. In Verbindung mit dem Mantel 21 werden im Filterkörper 20 wieder mehrere parallele Kanäle 16 ausgebildet, die parallel durchströmbar sind. Abweichend von einem herkömmlichen Faltensternfilter, dessen sternförmig gefaltetes Filtermaterial 19 radial durchströmt wird, ist beim hier vorgestellten Faltensternfilter 18 in Verbindung mit dem Mantel 21 eine axiale Durchströmung beabsichtigt. Dementsprechend besitzt das in Fig. 5 gezeigte Faltensternfilter 18 keine axialen Endscheiben, die bei radial durchströmten Faltensternfiltern standardmäßig vorhanden sind.

Als Filtermaterial 13, 14, 19 zum Herstellen des jeweiligen Geruchsfilters 8 kommt bevorzugt ein für Geruchsstoffe sorbierend, nämlich adsorbierend und/oder absorbierend wirkendes Filtermaterial zum Einsatz. Beispielsweise kann dieses Filtermaterial ein geeignetes Sorptionsmaterial aufweisen oder enthalten, das für Geruchsstoffe sorbierend wirkt. Je nach Sorptionsmaterial und abhängig von den Geruchsstoffen ergibt sich nur eine Adsorption oder nur eine Absorption oder sowohl eine Adsorption als auch eine Absorption.

Ein geeignetes Sorptionsmaterial ist bspw. Kohlenstoff bzw. Aktivkohle. Insbesondere kann es sich dabei auch um ein Verbundmaterial handeln, dessen Grundstoff aus Kunststoff und dessen Füllstoff durch Kohlenstoff gebildet ist. Ebenso kann es sich um ein faserförmiges Filtermaterial handeln, das mit Kohlenstoff angereichert ist. Beispielsweise kann ein Filterpapier einen Faserstoff als Grundmaterial und Kohlenstoff als Füllmaterial aufweisen.

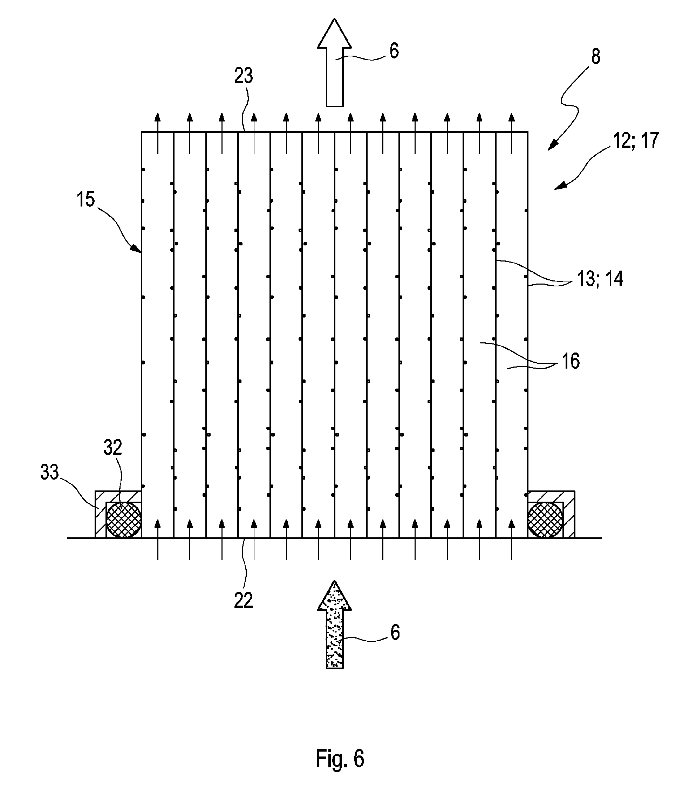

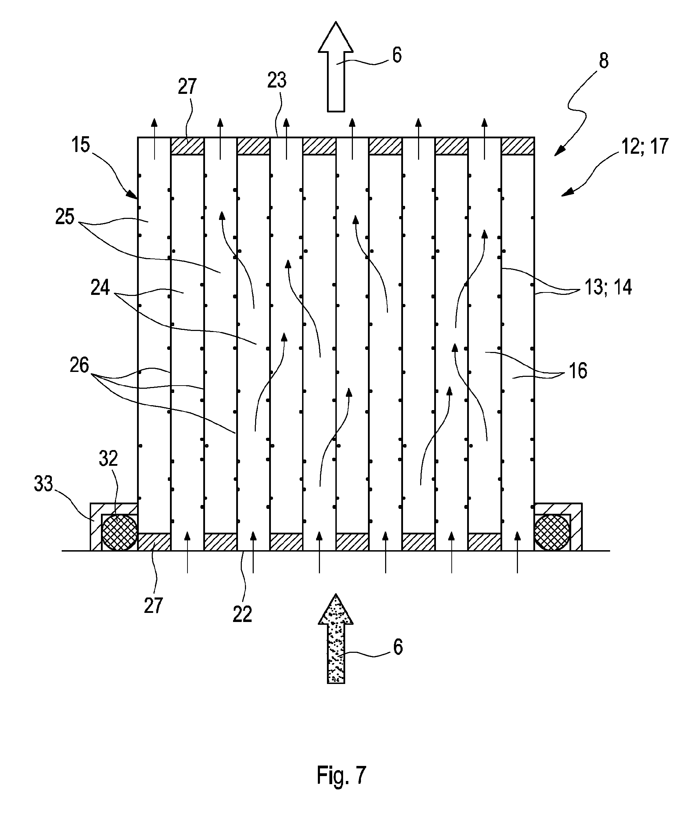

Wie bereits mit Bezug auf die Fig. 2 bis 5 erläutert worden ist, kann das jeweilige Geruchsfilter 8 mehrere Filterkanäle 16 aufweisen, die von der im Abführkanal 4 geführten Luftströmung 6 parallel durchströmbar sind. Die Fig. 6 und 7 zeigen nun besondere Ausführungsformen für das Geruchsfilter 8, die insbesondere bei einem Wickelfilter 12 sowie bei einem Stapelfilter 17 und bedingt auch bei einem Faltensternfilter 18 realisierbar sind.

Gemäß Fig. 6 sind die im Filterkörper 15 realisierten Filterkanäle 16 beidseitig offen. Das heißt die Filterkanäle 16 sind sowohl an einer Anströmseite 22 des Filterkörpers 15 als auch an einer Abströmseite 23 des Filterkörpers 15 offen. Die Luftströmung 6 kann folglich durch das Geruchsfilter 8 bzw. durch dessen Filterkörper 15 hindurchströmen, ohne dabei das jeweilige Filtermaterial 13, 14 des Geruchsfilters 8 zu durchströmen. Durch diese Bauweise kann ein Geruchsfilter 8 realisiert werden, dass einen besonders niedrigen Durchströmungswiderstand besitzt.

Im Unterschied dazu zeigt Fig. 7 eine Ausführungsform, bei welcher die Filterkanäle 16 wechselweise einlassseitig und auslassseitig verschlossen sind. Hierdurch werden auslassseitig verschlossene Einlasskanäle 24 und einlassseitig verschlossene Auslasskanäle 25 realisiert, die durch gemeinsame Wandungen 26 voneinander getrennt sind, die durch das jeweilige Filtermaterial 13, 14 gebildet sind. Das Verschließen der Filterkanäle 16 an der Einlassseite 22 bzw. an der Auslassseite 23 kann bspw. mittels Stopfen 27 oder dergleichen wie z. B. durch verkleben, verschweißen, verschäumen, realisiert werden. Durch das wechselweise Verschließen der Filterkanäle 16 wird die Luftströmung 6 gezwungen, bei der Durchströmung des Geruchsfilters 8 bzw. des Filterkörpers 15 die Wandungen 26 und somit das Filtermaterial 13, 14 zu durchströmen. Bei dieser Ausführungsform ergibt sich eine deutlich erhöhte Sorptionswirkung für Geruchsstoffe. Allerdings wird hierbei ein erhöhter Durchströmungswiderstand in Kauf genommen.

Bei den Fig. 6 und 7 ist die von der Abzugseinrichtung 1 erzeugte Luftströmung 6 durch Pfeile angedeutet, wobei der stromauf des Geruchsfilters 8 angeordnete Strömungspfeil eine mit Geruchsstoffen beladene Luftströmung 6 andeutet, was durch Punkte im Pfeil symbolisiert ist. Stromab des Geruchsfilters 8 enthält der Pfeil keine derartigen Punkte, was andeuten soll, dass die aus dem Geruchsfilter 8 austretende Luftströmung 6 von den Geruchsstoffen gereinigt ist. Ferner deuten eine Vielzahl von nicht näher bezeichneten, an den Wandungen 26, also am Filtermaterial 13, 14 angeordneten Punkten an, dass sich die Geruchsstoffe am Filtermaterial 13, 14 anlagern bzw. darin einlagern, also von diesem absorbiert bzw. adsorbiert werden.

Wie insbesondere mit Bezug auf die Fig. 6 und 7 erläutert worden ist, lassen sich unterschiedliche Geruchsfilter 8 realisieren, die sich bspw. Hinsichtlich der verwendeten Filtermaterialien bzw. Sorptionsmaterialien und/oder hinsichtlich ihrer geruchssorbierenden Wirkung und/oder hinsichtlich ihres Durchströmungswiderstands voneinander unterscheiden. Ferner lassen sich diese Eigenschaften des Geruchsfilters 8 auch dadurch variieren, dass der jeweilige Geruchsfilter 8 eine unterschiedliche Anzahl und/oder eine unterschiedliche Anordnung von Filterkanälen 16 besitzt. Zusätzlich oder alternativ können die Filterkanäle 16 auch variierende Strömungsquerschnitte aufweisen.

Bei einer besonders vorteilhaften Ausführungsform der Abzugseinrichtung 6 können im Abführkanal 4 nun wenigstens zwei verschiedene Geruchsfilter 8 hintereinander angeordnet sein, die sich zumindest hinsichtlich einer der vorstehend genannten Eigenschaften voneinander unterscheiden. Beispielsweise ist es dadurch möglich, ein von der Luftströmung 6 zuerst angeströmtes Geruchsfilter 8 hinsichtlich "schwerer" Gerüche auszulegen, bspw. um langkettige Geruchsmoleküle einfacher sorbieren zu können. Dieses Geruchsfilter 8 kann dann bspw. einen vergleichsweise kleinen Durchströmungswiderstand besitzen. Ein diesbezüglich nachfolgend angeordnetes Geruchsfilter 8 kann dann für "leichte" Gerüche ausgelegt sein, um bspw. kurzkettige Geruchsmoleküle besser sorbieren zu können. Da die langkettigen Geruchsmoleküle dann bereits aus der Luftströmung 6 herausgefiltert sind, kann insgesamt die Standzeit der beiden verschiedenen Geruchsfilter 8 gegenüber einer Filteranordnung erheblich gesteigert werden, bei der zwei gleiche Geruchsfilter 8 hintereinander angeordnet sind.

Die Fig. 6 und 7 deuten ferner eine Dichtung 32, z. Bsp. in Form eines O-Rings, an, mit deren Hilfe das Geruchsfilter 8 bzw. sein Filterkörper 15 gegenüber einem Rahmen 33 abgedichtet werden kann, der im Abführkanal 4 zur Aufnahme des Geruchsfilters 8 vorhanden sein kann.

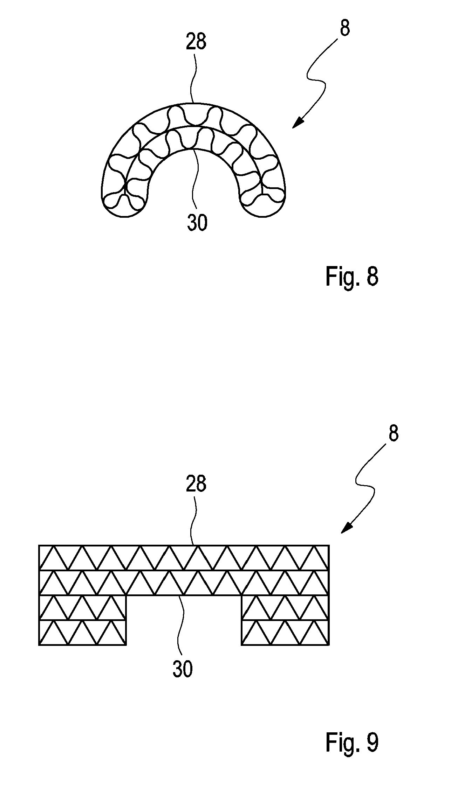

Entsprechend den Fig. 8 und 9 lassen sich die Geruchsfilter 8 hinsichtlich ihrer Geometrie besonders einfach an die im Abführkanal 4 zur Verfügung stehende Querschnittsgeometrie adaptieren. So kann bspw. eine Außenkontur 28 des jeweiligen Geruchsfilters 8 komplementär zu einer Innenkontur 29 des Kanals 4 geformt sein. Insbesondere kann in diese Außenkontur 28 gemäß den Fig. 8 und 9 eine Ausnehmung oder Aussparung 30 integriert sein, in die ein im Abführkanal 4 verlaufender Schacht 31 eingreift, in dem bspw. elektrische Kabel oder dergleichen verlegt sein können.

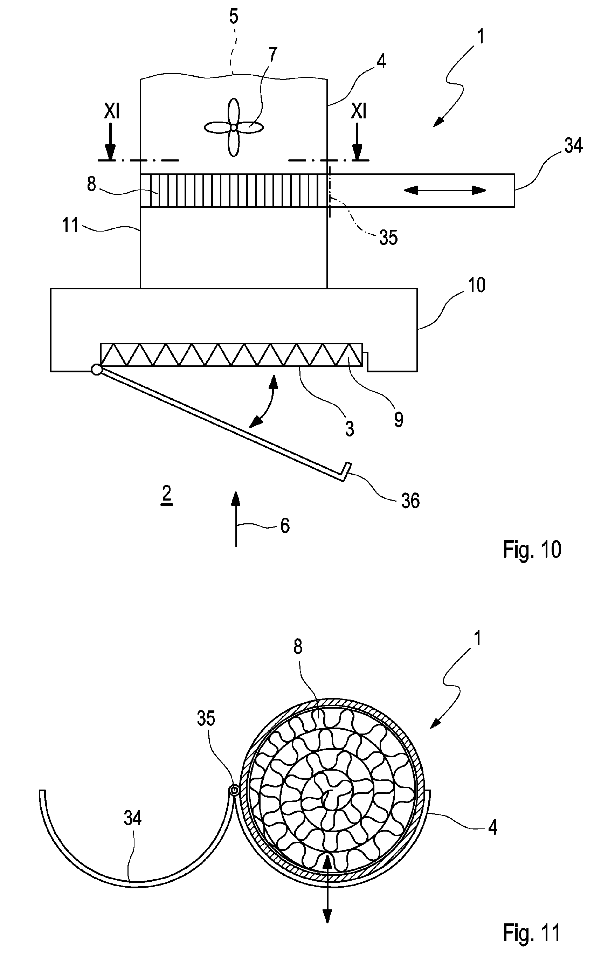

Entsprechend den Fig. 10 und 11 kann der Abführkanal 4 einen Zugriff 34 aufweisen, der eine Zugriffsmöglichkeit zum Geruchsfilter 8 schafft. Der Zugriff 34 ist bevorzugt vom Einlass 3 des Kanals 4 beabstandet. Im Beispiel ist er beabstandet zur Haube 10 am Kamin 11 positioniert. Bei den Fig. 10 und 11 ist der Zugriff 34 als Klappe konfiguriert, die um eine Schwenkachse 35 gegenüber dem übrigen Abführkanal 4 verschwenkbar ist und sich parallel zur Längsachse des Kanals 4 erstreckt. Bei aufgeschwenkter Klappe 34 ist ein seitlicher Zugriff zum Geruchsfilter 8 möglich. Hierdurch kann insbesondere ein Wechsel des Geruchsfilters 8 durchgeführt werden. Hierzu wird der Geruchsfilter 8 quer zur Längsachse herausgezogen. Alternativ zu einer Klappe ist es ebenso möglich, den Zugriff 34 bspw. in Form einer Schublade zu realisieren. Das Geruchsfilter 8 kann hierbei orthogonal oder winklig zur Durchströmungsrichtung bzw. zur Längsachse angeordnet sein und dann in dieser Richtung aus dem Abführkanal 4 entfernt werden.

Gemäß Fig. 10 kann für das Partikelfilter 9 ebenfalls eine Wartungsklappe 36vorgesehen sein, die von der Haube 10 aufklappbar ist, um einen Zugriff zum Partikelfilter 9 zu ermöglichen. Hierbei wird das Partikelfilter 9 entgegen der Durchströmungsrichtung aus seiner Aufnahme entfernt. Alternativ kann die Wartungsklappe 36 auch als Schublade ausgeführt sein, welche parallel, orthogonal oder winklig zur Durchströmungsrichtung herausgezogen werden kann. Weiterhin kann die Wartungsklappe 36 auch durch eine kombinierte Bewegung, z.B. durch schwenken und anschließend schieben/ziehen geöffnet und geschlossen werden. In gleicher Weise kann das Geruchsfilter 8 und/oder das Partikelfilter 9 durch eine beliebige Kombination einer rotativen und einer translatorischen Bewegung aus der jeweiligen Aufnahme entfernt bzw. eingesetzt werden.

Bei einer weiteren Ausführung können Partikelfilter 9 und Geruchsfilter 8 durch dieselbe Wartungsöffnung, welche z.B. durch eine Wartungsklappe oder Schublade gebildet ist, ausgetauscht werden. Hierbei ist dann zuerst das eine Filter 8 oder 9 zu entfernen, um an das andere Filter 8 oder 9 zu gelangen und dieses dann zu entfernen.

## Patentansprüche

1. Abzugseinrichtung zum Absaugen von Dampf und/oder Gas aus einem Arbeitsbereich (2),
- mit einem zum Arbeitsbereich (2) offenen Einlass (3),
- mit einem Abführkanal (4), der den Einlass (3) mit wenigstens einem Auslass (5) verbindet,
- mit einem im Abführkanal (4) angeordneten Gebläse (7),
- mit einem im Abführkanal (4) angeordneten Geruchsfilter (8),
- wobei das Geruchsfilter (8) mehrere Filterkanäle (16) aufweist, die von der im Abführkanal (4) geführten Strömung (6) parallel durchströmbar sind,
- wobei das Geruchsfilter (8) als Filtermaterial (14, 19) ein gewelltes oder gefaltetes Bahnenmaterial aufweist,
- wobei die Filterkanäle (16) durch Falten oder Wellen des Filtermaterials (14, 19) gebildet sind.

2. Abzugseinrichtung nach Anspruch 1,
**dadurch gekennzeichnet,**
**dass** das Geruchsfilter (8) ein für Geruchsstoffe sorbierend wirkendes Filtermaterial (13, 14) aufweist.

3. Abzugseinrichtung nach Anspruch 2,
**dadurch gekennzeichnet,**
**dass** das Filtermaterial (13, 14) ein für Geruchsstoffe sorbierend wirkendes Sorptionsmaterial, insbesondere Aktivkohle, enthält.

4. Abzugseinrichtung nach einem der Ansprüche 1 bis 3,
**dadurch gekennzeichnet,**
**dass** im Abführkanal (4) zusätzlich zum Geruchsfilter (8) ein Partikelfilter (9) angeordnet ist, wobei insbesondere vorgesehen sein kann, dass das Partikelfilter (9) stromauf des Geruchsfilters (8) im Abführkanal (4) angeordnet ist.

5. Abzugseinrichtung nach einem der vorangehenden Ansprüche
**dadurch gekennzeichnet,**
- **dass** die Filterkanäle (16) beidseitig offen sind, so dass die Strömung (6) durch das Geruchsfilter (8) hindurchströmen kann, ohne das Filtermaterial (13, 14) des Geruchsfilters (8) zu durchströmen, oder
- **dass** die Filterkanäle (16) wechselweise einlassseitig und auslassseitig verschlossen sind, so dass die Strömung (6) beim Durchströmen des Geruchsfilters (8) das Filtermaterial (13, 14) des Geruchsfilters (8) durchströmt.

6. Abzugseinrichtung nach einem der Ansprüche 1 bis 5,
**dadurch gekennzeichnet,**
- **dass** das Geruchsfilter (8) als Wickelfilter (12) ausgestaltet ist, wobei insbesondere vorgesehen sein kann, dass das Wickelfilter (12) durch Wickeln von wenigstens zwei aufeinander liegenden Filtermaterialien (13, 14) gebildet ist, von denen das eine eben ist, während das andere gewellt oder zick-zack-förmig ausgestaltet ist, oder
- **dass** das Geruchsfilter (8) als Stapelfilter (17) ausgestaltet ist, wobei insbesondere vorgesehen sein kann, dass das Stapelfilter (17) durch abwechselndes Stapeln von wenigstens zwei Filtermaterialien (13, 14) gebildet ist, von denen das eine eben ist, während das andere gewellt oder zick-zack-förmig ausgestaltet ist, oder
- **dass** das Geruchsfilter (8) als Faltensternfilter (18) ausgestaltet ist, wobei insbesondere vorgesehen sein kann, dass das Faltensternfilter (18) durch ringförmiges Anordnen eines gefalteten Filtermaterials (19) gebildet ist, wobei optional ein den Faltenstern (20) umschließender Mantel (21) aus Filtermaterial vorgesehen sein kann.

7. Abzugseinrichtung nach einem der Ansprüche 1 bis 6,
**dadurch gekennzeichnet,**
**dass** das den Einlass (3) aufweisende Kanalende als Haube (10) ausgestaltet ist, wobei insbesondere vorgesehen sein kann, dass das Geruchsfilter (8) oder das Partikelfilter (9) in der Haube (10) angeordnet ist.

8. Abzugseinrichtung nach einem der Ansprüche 1 bis 7,
**dadurch gekennzeichnet,**
**dass** zumindest zwei verschiedene Geruchsfilter (8) im Abführkanal (4) hintereinander angeordnet sind, die sich insbesondere hinsichtlich der verwendeten Filtermaterialien und/oder Sorptionsmaterialien und/oder hinsichtlich ihrer geruchssorbierenden Wirkungen und/oder hinsichtlich ihres Durchströmungswiderstands und/oder hinsichtlich Anzahl und/oder Anordnung und/oder Strömungsquerschnitt der Filterkanäle (16) voneinander unterscheiden.

9. Abzugseinrichtung nach einem der Ansprüche 1 bis 8,
**dadurch gekennzeichnet,**
**dass** der Abführkanal (4) beabstandet zum Einlass (3) einen seitlichen Zugriff (34) zum Geruchsfilter (8) aufweist, z. Bsp. in Form einer Klappe oder Schublade.

10. Geruchsfilter für eine Abzugseinrichtung (1) nach einem der Ansprüche 1 bis 9.
